# EUROPÄISCHE PATENTSCHRIFT

(11) **EP 2 860 409 B1**
(45) Veröffentlichungstag und Bekanntmachung des Hinweises auf die Patenterteilung: **16.11.2016**
(21) Anmeldenummer: 14187414.9
(22) Anmeldetag: 02.10.2014
(51) Int. Cl.: F16B 12/20, A47B 21/06, A47B 97/00

(54) **Vorrichtung zur Befestigung von Gegenständen an Tischplatten**
Device for fixing objects to table tops
Dispositif de fixation d'objets sur des plateaux de table

(30) Priorität: 09.10.2013 DE 202013104562 U
(43) Veröffentlichungstag der Anmeldung: 15.04.2015
(73) Patentinhaber: Schulte Elektrotechnik GmbH & Co. Kg, 58515 Lüdenscheid (DE)
(72) Erfinder: Messy, Christian, 58708 Menden (DE); Schulte, Siegfried, 58515 Lüdenscheid, Hellersen (DE)
(74) Vertreter: Patentanwälte Dörner & Kötter PartG mbB

(56) Entgegenhaltungen:
- WO-A1-2011/115556
- FR-A1- 2 759 314
- US-A- 104 606
- US-A- 607 891
- US-A- 1 062 460
- US-A- 5 478 041
- US-A1- 2006 016 953

## Beschreibung

Die Erfindung betrifft eine Vorrichtung zur Befestigung von Gegenständen an Tischplatten, umfassend einen Grundkörper mit einem Auflagebereich und einem Aufnahmebereich, wobei an dem Grundkörper ein Widerlager beweglich angeordnet ist, welches mit Hilfe einer Arretiereinrichtung fixierbar ist, wobei die Arretiereinrichtung von einem Exzenter gebildet ist, an dem ein Betätigungshebel angeordnet ist.

Vorrichtungen zur Befestigung von Gegenständen an Tischplatten sind in vielfältiger Weise bekannt. In ihrer einfachsten Ausbildung bestehen die Vorrichtungen aus einem im Querschnitt U-förmigen Bügel, der mit seinem einen Schenkel auf der jeweiligen Tischplatte aufliegt und in dessen anderen Schenkel eine Gewindebohrung vorgesehen ist, durch die eine Schraube geführt ist. An der der Tischplatte zugewandten Seite der Schraube ist ein Teller vorgesehen, mit der die Vorrichtung an dem Tisch arretierbar ist. Um Tischplatten unterschiedlicher Dicke bzw. Tische, an denen Kabelkanäle angeordnet sind, ebenfalls mit den genannten Vorrichtungen versehen zu können, ist es erforderlich, einen großen Abstand zwischen den beiden parallelen Schenkeln vorzusehen. Hierdurch bedingt ist, dass die durch den unteren Schenkel eingeführte Schraube relativ lang ist, was bei relativ dünnen Tischplatten eine sehr große Einschraubtiefe zur Folge hat, die die Bedienung der Vorrichtung umständlich macht. Zudem besteht eine Verletzungsgefahr aufgrund nach unten hervorstehender Schrauben.

Zur Vermeidung dieses Nachteils sind Vorrichtungen bekannt, die im Wesentlichen als U-förmig die Tischplatte umgreifende Klemmbügel ausgebildet sind. Die Klemmbügelrücken sind geteilt ausgeführt, so dass verschiedene Klemmbereiche einstellbar sind. Die eigentliche Klemmung an der Tischplatte erfolgt durch Klemmschrauben, die durch den oberen oder unteren Klemmschenkel hindurch gegen die Tischplattenoberseite oder gegen die Tischplattenunterseite bzw. den dort an ggf. vorhandenen Stahlrahmen oder Kabelkanal geschraubt werden. An dem auf der Tischplattenoberseite aufliegenden Schenkel ist eine Vorrichtung vorgesehen, an der beispielsweise EDV- oder Bürogeräte angebaut werden können. Zwar bietet die bekannte Vorrichtung den Vorteil, lange Gewinde zu vermeiden, da die Arretierung mit Hilfe der Schrauben nicht in vertikaler Richtung, sondern in horizontaler Richtung durch den Rücken der Vorrichtung erfolgt. Es sind jedoch jeweils zwei Schrauben vorgesehen, die zur Arretierung der Vorrichtung zu verschrauben sind. Hierzu ein Werkzeug erforderlich, mit dem dann die beiden Schrauben in der gewünschten Position fixiert werden. Dies gestaltet sich relativ aufwändig, weil insbesondere in dem Fall, in den bereits Gegenstände an der Vorrichtung angebracht sind, diese gestützt werden müssen, bis die Vorrichtung die Klemmposition eingenommen hat. Somit ist es üblicherweise erforderlich, dass mehrere Personen gleichzeitig bei der Arretierung der Vorrichtung vorhanden sein müssen.

Vorrichtungen, die mit einem Exzenter versehen sind, sind beispielsweise in der US 104 606 A, FR 2 759 314 A1, US 1 062 460 A, US 607 891 A, US 5 478 041 A sowie der WO 2011/115556 A1 beschrieben.

Vor diesem Hintergrund liegt der Erfindung die Aufgabe zu Grunde, eine Vorrichtung zur Befestigung von Gegenständen an Tischplatten zu schaffen, die eine Arretierung ohne Zuhilfenahme von Werkzeugen und gleichzeitig mit nur einer Hand in kurzer Montagezeit ermöglicht. Gemäß der Erfindung wird diese Aufgabe durch die Merkmale des Patentanspruchs 1 gelöst.

Mit der Erfindung ist eine Vorrichtung zur Befestigung von Gegenständen an Tischplatten geschaffen, die sich ohne Werkzeug an der jeweiligen Tischplatte befestigen lässt. Dies findet seine Ursache in der Verwendung eines Exzenters, der in einfacher Weise um einen vorbestimmten Winkel verdreht werden muss, um eine Klemmwirkung zu erzielen. Dies ist mit einer Hand möglich und kann gleichzeitig ohne Werkzeug erfolgen. Infolgedessen kann eine Montage der Vorrichtung auch mit bereits daran angeordneten Gegenständen von nur einer Person in sehr kurzer Zeit vorgenommen werden. Der Betätigungshebel erhöht dabei den Bedienkomfort, so dass die Einhand-Bedienung der Vorrichtung weiter erleichtert ist.

In Weiterbildung der Erfindung ist der Exzenter in einem Schlitz geführt, welcher in dem Widerlager ausgebildet ist. Durch den Schlitz ist eine nahezu stufenlose Verstellung der Einstellhöhe des Widerlagers möglich, sodass die Vorrichtung an Tischplatten beliebiger Dicke zuverlässig angebracht werden kann.

In Ausgestaltung der Erfindung sind das Widerlager und der Grundkörper in montiertem Zustand von einer Abdeckung übergriffen. Hierdurch ist der optische Eindruck der erfindungsgemäßen Vorrichtung verbessert. Gleichzeitig ist gewährleistet, dass beispielsweise auf der Rückseite der Vorrichtung heruntergeführte Kabel nicht versehentlich von der Vorrichtung eingeklemmt werden. Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Figur 1: die Ansicht einer Vorrichtung zur Befestigung von Gegenständen an Tischplatten;
- Figur 2: die Seitenansicht von links der in Figur 1 dargestellten Vorrichtung;
- Figur 3: die rückwärtige Ansicht der Vorrichtung mit teilweise aufgeschnittener Abdeckung;
- Figur 4: die Ansicht eines Widerlagers mit Arretiereinrichtung;
- Figur 5: die Seitenansicht des in Figur 4 dargestellten Widerlagers mit Arretiereinrichtung;
- Figur 6: die rückwärtige Ansicht des in Figur 4 dargestellten Widerlagers mit Arretiereinrichtung;
- Figur 7: die perspektivische Darstellung der in Figur 1 dargestellten Vorrichtung;
- Figur 8: die Ansicht der in Figur 1 dargestellten Vorrichtung mit herangeführten Kabeln und Kabelkanal;
- Figur 9: die Seitenansicht von links der in Figur 8 dargestellten Vorrichtung;
- Figur 10: die perspektivische Darstellung einer Vorrichtung zur Befestigung von Gegenständen an Tischplatten mit Abdeckung.

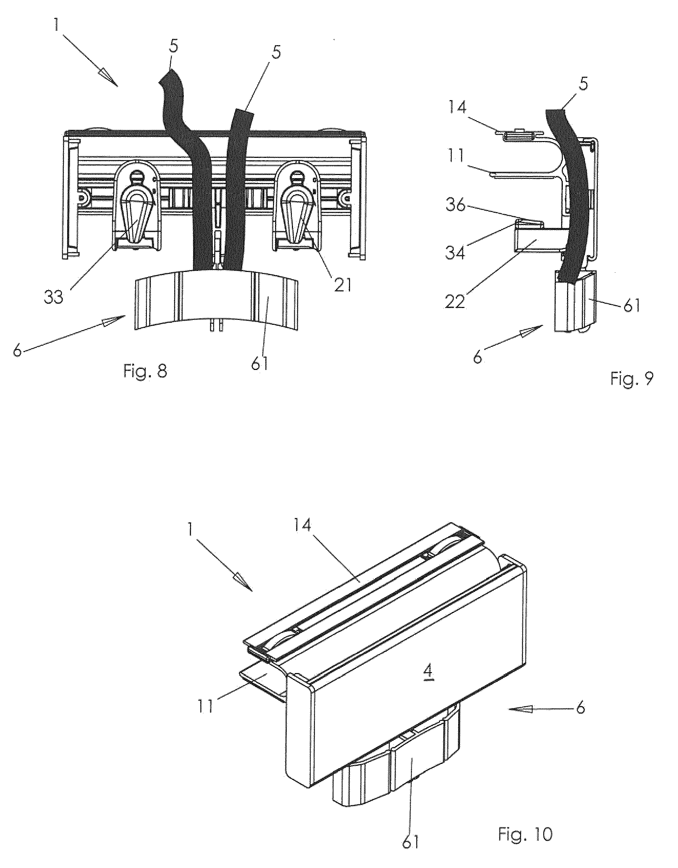

Die als Ausführungsbeispiel gewählte Vorrichtung zur Befestigung von Gegenständen an Tischplatten ist aus Metall hergestellt. Sie umfasst einen Grundkörper 1, an dem ein Widerlager 2 beweglich angeordnet ist. Das Widerlager 2 ist mit Hilfe einer Arretiereinrichtung 3 fixierbar. Das Widerlager 2 und der Grundkörper 1 können in montiertem Zustand von einer Abdeckung 4 übergriffen sein (Figur 10).

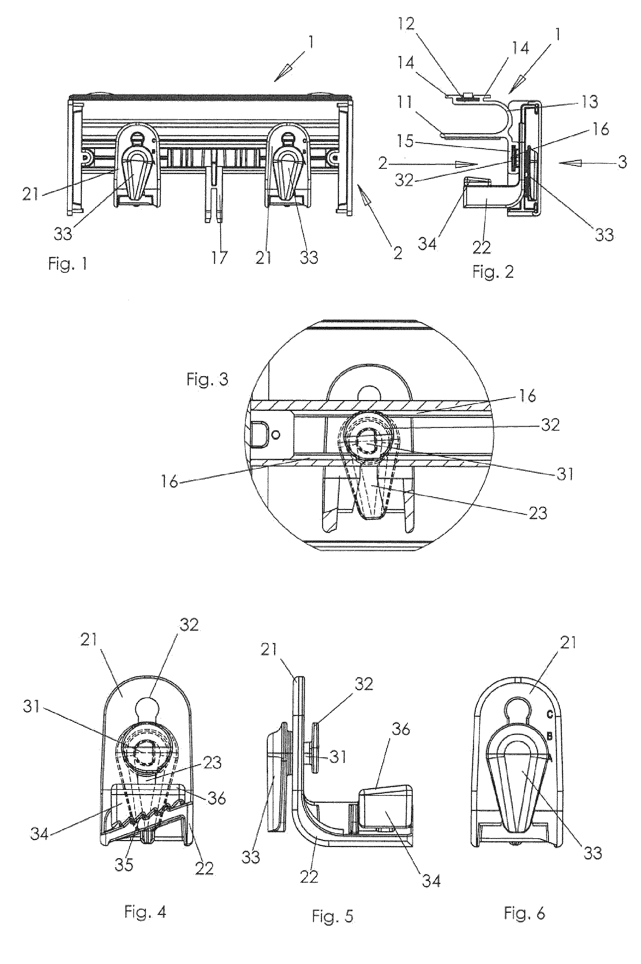

Der Grundkörper 1 weist einen Auflagebereich 11 und einen Aufnahmebereich 12 auf, die im Ausführungsbeispiel parallel zueinander ausgerichtet sind. Sie sind durch einen Bogen 13 miteinander verbunden, wodurch sich in der Seitenansicht eine U-förmige Ausgestaltung ergibt (Figur 2).

Auf der Oberseite des Aufnahmebereichs 12 sind Schienen 14 angeordnet, die zur Aufnahme der Gegenstände dienen. Die Verwendung der Schienen ermöglicht einerseits ein Verclipsen der Gegenstände auf der Vorrichtung, andererseits besteht die Möglichkeit, die Gegenstände von einer Seite auf die Vorrichtung aufzuschieben. Andere Arten von Befestigungsmöglichkeiten wie beispielsweise die Anordnung eines Zapfens oder dergleichen sind ebenfalls möglich.

Am Übergang zwischen Auflagebereich 11 und Bogen 13 ist ein Halteelement 15 angeordnet, welches im Wesentlichen rechtwinklig zum Auflagebereich 11 ausgerichtet ist. Das Halteelement 15 ist auf seiner einen Seite mit einer Führung 16 versehen, die mit dem Widerlager 2 korrespondiert. Der Grundkörper 1 weist außerdem eine Aufhängung 17 sowie Kabelführungen 18 auf.

Das Widerlager 2 hat einen im Wesentlichen L-förmigen Querschnitt. Hierdurch sind zwei Schenkel 21, 22 ausgebildet, wobei der Schenkel 21 im Wesentlichen senkrecht und damit parallel zum Halteelement 15 ausgerichtet. In dem Schenkel 21 ist ein Schlitz 23 ausgebildet, der sich entlang der Längsmittellinie des Schenkels 21 erstreckt. Der Schenkel 22 ist im Wesentlichen horizontal ausgerichtet.

Die Arretiereinrichtung 3 ist von einem Exzenter 31 gebildet. Der Exzenter 31 durchsetzt den Schlitz 23 des Widerlagers 2. Auf der der Tischplatte zugewandten Seite ist an dem Exzenter 31 eine im Ausführungsbeispiel runde Platte 32 angeordnet, die in montiertem Zustand in die Führung 16 des Grundkörpers 1 fasst. Der Durchmesser der Platte 32 entspricht der lichten Weite der Führung 16, wie dies insbesondere den Figuren 2 und 3 zu entnehmen ist. An dem Exzenter 31 ist auf der der Tischplatte abgewandten Seite ein Betätigungshebel 33 angeordnet. Es ist eine Feineinstellung 34 vorgesehen, die mit dem Schenkel 22 des Widerlagers 2 in Kontakt steht. Die Feineinstellung 34 ist mit einer schiefen Ebene versehen, welche eine Rasterung 35 aufweist. Im Ausführungsbeispiel bewirkt die Rasterung eine Höhenstufung von jeweils einem Millimeter. Auf seiner dem Exzenter 31 zugewandten Seite ist an der Feineinstellung 34 eine Abstützfläche 36 ausgebildet.

Bei der Benutzung der erfindungsgemäßen Vorrichtung zur Befestigung von Gegenständen an Tischplatten wird zunächst die Arretiereinrichtung 3 an dem Widerlager 2 angebracht, so dass der Exzenter 31 in dem Schlitz 23 geführt ist. In seiner nicht verspannten Position lässt sich der Exzenter 31 problemlos über die gesamte Länge des Schlitzes 23 verschieben. Sodann wird die Platte 32 der Arretiereinrichtung 3 in die Führung 16 des Grundkörpers 1 eingeschoben, wodurch Grundkörper 1, Widerlager 2 und Arretiereinrichtung 3 zuverlässig miteinander verbunden sind.

In diesem Montagezustand wird die Vorrichtung auf die jeweilige Tischplatte aufgeschoben. Dies erfolgt derart, dass die Tischplatte zwischen dem Auflagebereich 11 des Grundkörpers 1 und dem Schenkel 22 mit der Feineinstellung 34 des Widerlagers 2 positioniert wird. In dieser Position besteht in der Regel zwischen der Abstützfläche 36 der Feineinstellung 34 und der Unterseite der Tischplatte ein Abstand. Durch Verschieben der Arretiereinrichtung 3 entlang des Schlitzes 23 wird der Schenkel 22 mit der Feineinstellung 34 an die Unterseite der Tischplatte herangeführt, bis die Abstützfläche 36 mit dieser in Kontakt tritt. In dieser Lage wird der Betätigungshebel 33 verschwenkt, wodurch sich der Exzenter 31 in dem Schlitz 23 aus seiner Position auf der Längsmittellinie des Schlitzes 23 in eine Position außerhalb der Längsmittellinie bewegt. Die Drehbewegung ist dabei aufgrund der runden Ausbildung der Platte 32 nicht behindert. Es erfolgt so eine Verspannung zwischen dem Exzenter 31 und dem Schlitz 23. Für den Fall, dass die Abstützfläche 36 nach dem Verspannen des Exzenters 31 noch nicht mit der Tischplatte in Kontakt tritt, kann durch Bewegen der Feineinstellung 34 aufgrund der kleinen Stufung der Rasterung 35 eine Feinjustierung beim Verklemmen vorgenommen werden, mit der die im Verhältnis großen Abstände der Klemmstufen des Exzenters 31 in kleinere Klemmstufen aufgeteilt werden können. Durch die genannte Ausgestaltung ist das Widerlager 2 zuverlässig an dem Grundkörper 1 gehalten. Gleichzeitig ist die Vorrichtung an der Tischplatte geklemmt gehalten.

In an der Tischplatte arretiertem Zustand können dann Gegenstände, wie beispielsweise Docking-Stationen zu Strom- und Datennetzen, angebaut werden. Im Ausführungsbeispiel erfolgt dies in einfacher Weise durch Aufschieben oder Aufstecken auf die Schienen 14 des Grundkörpers 1. Wie in den Figuren 1 und 3 erkennbar, können durch benachbarter Anordnung von zwei oder mehr erfindungsgemäßen Vorrichtungen auch Gegenstände mit größeren Abmessungen an der jeweiligen Tischplatte befestigt werden. Insbesondere für solche Anwendungen hat sich die Verwendung der Schienen 14 zum Anbau der Gegenstände bewährt, da in diesem Fall durch Anbringen der Vorrichtungen an der Tischplatte ohne Arretierung und anschließendes seitliches Aufschieben der Gegenstände eine Ausrichtung der Vorrichtungen mit anschließender Arretierung vorgenommen werden kann.

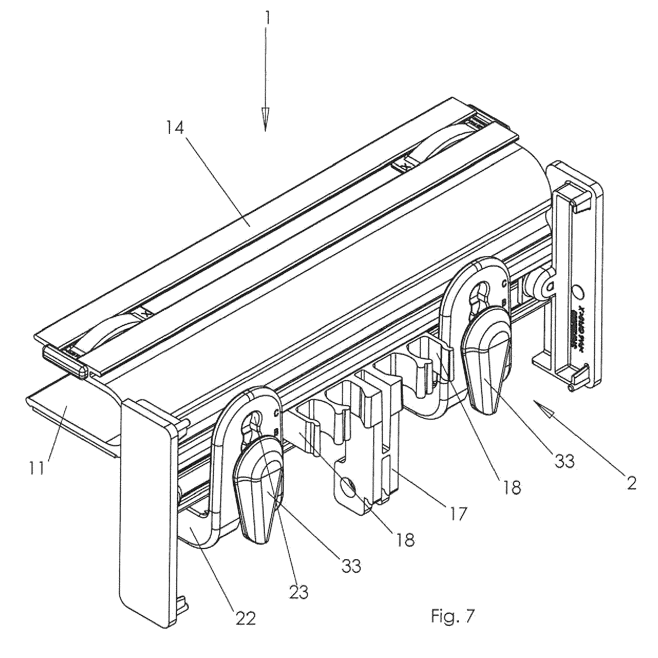

Wie in den Figuren 7 und 8 dargestellt, werden in montiertem Zustand Daten- und / oder Stromkabel 5 an die Vorrichtung herangeführt. Die Kabel 5 sind einerseits in den Kabelführungen 18, andererseits im Ausführungsbeispiel in einem flexiblen Kabelkanal 6 geführt, der aus beweglich miteinander verbundenen Elementen 61 besteht. Der Kabelkanal 5 ist an die Aufhängung 17 angehängt. In Figur 10 ist die Vorrichtung mit geschlossener Abdeckung 4 dargestellt. Erkennbar sind der Grundkörper 1 und das Widerlager 2 auf ihrer Rückseite von der Abdeckung 4 übergriffen. Die Abdeckung 4 ist vorzugsweise schwenkbar am dem Grundkörper 1 angeordnet. Durch die Abdeckung 4 ist der optische Eindruck der erfindungsgemäßen Vorrichtung verbessert.

Zum Lösen der Vorrichtungen braucht allein der Betätigungshebel 33 in seine Ausgangsposition bewegt zu werden, wodurch die Verspannung zwischen Widerlager 2 und Arretiereinrichtung 3 aufgehoben wird. Die Vorrichtung kann dann von der Tischplatte abgezogen werden.

## Patentansprüche

1. Vorrichtung zur Befestigung von Gegenständen an Tischplatten, umfassend einen Grundkörper (1) mit einen Auflagebereich und einem Aufnahmebereich, wobei an dem Grundkörper (1) ein Widerlager (2) beweglich angeordnet ist, welches mit Hilfe einer Arretiereinrichtung (3) fixierbar ist, wobei die Arretiereinrichtung (3) von einem Exzenter (31) gebildet ist, an dem ein Betätigungshebel (33) angeordnet ist, **dadurch gekennzeichnet, dass** eine Feineinstellung (34) vorgesehen ist, die mit einer schiefen Ebene versehen ist, welche eine Rasterung (35) aufweist und an der dem Exzenter (31) zugewandten Seite der Feineinstellung eine Abstützfläche (36) ausgebildet ist.

2. Vorrichtung nach Anspruch 1, **dadurch gekennzeichnet, dass** der Exzenter (31) in einem Schlitz (23) geführt ist, welcher in dem Widerlager (2) ausgebildet ist.

3. Vorrichtung nach einem oder mehreren der vorgenannten Ansprüche, **dadurch gekennzeichnet, dass** das Widerlager (2) einen im Wesentlichen L-förmigen Querschnitt hat.

4. Vorrichtung nach einem oder mehreren der vorgenannten Ansprüche, **dadurch gekennzeichnet, dass** das Widerlager (2) und der Grundkörper (1) in montiertem Zustand von einer Abdeckung (4) übergriffen sind.

## Claims

1. Device for fixing objects to table tops comprising a base body (1) having a support area and a receiving area, wherein an abutment (2) is movably arranged at the base body (1), which is securable by means of a locking device (3), wherein the locking device (3) is formed by an eccentric (31), at which an operating lever (33) is arranged, **characterised in that** a fine adjustment mechanism (34) is provided, which is provided with an inclined plane, which has a detent (35), and on the side of the fine adjustment mechanism facing the eccentric (31) a supporting surface (36) is arranged.

2. Device according to claim 1, **characterised in that** the eccentric (31) is guided in a slot (23), which is arranged in the abutment (2).

3. Device according to one or more of the previous claims, **characterised in that** the abutment (2) has a substantially L-shaped cross-section.

4. Device according to one or more of the previous claims, **characterised in that** the abutment (2) and the base body (1) in a mounted state are engaged over by a cover (4).

## Revendications

1. Dispositif de fixation d'objets contre des plateaux de table, comprenant un corps de base (1) avec une zone d'appui et une zone réceptacle, sachant qu'un palier antagoniste (2) est agencé de manière mobile contre le corps de base (1), palier qu'il est possible d'immobiliser à l'aide un dispositif de retenue (3), sachant que le dispositif de retenue (3) est formé par un excentrique (31) contre lequel est agencé un levier d'actionnement (33), **caractérisé en ce qu'**est prévu un dispositif de réglage de précision (34) muni d'un plan incliné qui présente un crantage (35) et que sur le côté regardant l'excentrique (31) est configurée une surface d'appui (36).

2. Dispositif selon la revendication 1, **caractérisé en ce que** l'excentrique (31) est guidé dans une fente (23) configurée dans le palier antagoniste (2).

3. Dispositif selon une ou plusieurs des revendications précédentes, **caractérisé en ce que** le palier antagoniste (2) présente une section essentiellement en forme de L.

4. Dispositif selon l'une ou plusieurs des revendications précédentes, **caractérisé en ce que** le palier antagoniste (2) et le corps de base (1) sont, à l'état monté, recouverts par un couvercle (4).
